# EUROPÄISCHE PATENTANMELDUNG

(11) **EP 3 357 581 A1**
(43) Veröffentlichungstag der Anmeldung: **08.08.2018**
(21) Anmeldenummer: 18155438.7
(22) Anmeldetag: 07.02.2018
(51) Int. Cl.: B03B 9/06

(54) **VERFAHREN UND SYSTEM ZUR AUFBEREITUNG VON BETONRESTWASSER**

(30) Priorität: 07.02.2017 DE 102017102351
(71) Anmelder: Hahn, Bernd, 87743 Egg an der Günz (DE)
(72) Erfinder: Hahn, Bernd, 87743 Egg an der Günz (DE)
(74) Vertreter: Hoeger, Stellrecht & Partner Patentanwälte mbB

(57) **Zusammenfassung**

Um ein Verfahren zur Aufbereitung von Betonrestwasser, welches bei der Frischbetonproduktion als Abwasser anfällt und frischen Rück- oder Restbeton enthält, bei welchem Verfahren Betonrestwasser gesammelt und gereinigt wird, beim Reinigen des Betonrestwassers in diesem enthaltene sedimentierbare Feststoffe abgetrennt oder entfernt werden und aus den abgetrennten oder entfernten sedimentierbaren Feststoffen Feststoffkörper ausgebildet werden, so zu verbessern, dass die Menge der zu entsorgenden, nicht weiter verwertbaren sedimentierbaren Stoffe verringert wird, wird vorgeschlagen, dass die Feststoffkörper zu Feststoffkörnern zerkleinert werden oder dass die Feststoffkörper in Form von Feststoffkörnern ausgebildet werden.

## Beschreibung

Die vorliegende Erfindung betrifft ein Verfahren zur Aufbereitung von Betonrestwasser, welches bei der Frischbetonproduktion als Abwasser anfällt und frischen Rück- oder Restbeton enthält, bei welchem Verfahren Betonrestwasser gesammelt und gereinigt wird, beim Reinigen des Betonrestwassers in diesem enthaltene sedimentierbare Feststoffe abgetrennt oder entfernt werden und aus den abgetrennten oder entfernten sedimentierbaren Feststoffen Feststoffkörper ausgebildet werden.

Ferner betrifft die vorliegende Erfindung ein System zur Aufbereitung von Betonrestwasser, welches bei der Frischebetonproduktion als Abwasser anfällt und frischen Rück- oder Restbeton enthält, umfassend eine Sammeleinrichtung zum Sammeln des Betonrestwassers und eine Reinigungseinrichtung zum Reinigen des Betonrestwassers, welche Reinigungseinrichtung ausgebildet ist zum Reinigen des Betonrestwassers durch Abtrennen von Feststoffen, welches System ferner eine Verfestigungseinrichtung zum Ausbilden von Feststoffkörpern aus den abgetrennten Feststoffen umfasst.

Bei der Frischbetonproduktion in einem Betonwerk fällt täglich eine nicht unerhebliche Menge an sogenanntem frischen Rück- oder Restbeton an. Dabei handelt es sich um Beton, welcher noch nicht oder noch nie abgebunden hat und somit noch in viskoser Form vorliegt.

Es ist bekannt, frischen, noch nicht abgebundenen Beton, welcher beispielsweise beim Reinigen einer Betonmischanlage oder einer Lkw-Fahrmischers mit Wasser ausgespült wird, in einer Betonrecyclinganlage zu reinigen. In derartigen Anlagen werden durch Zugabe von Wasser im Gegenstrom der anhaftende Zement und die feinen Sandkörnchen vom groben Gestein und Sand durch Auswaschen getrennt. Grobe Bestandteile des ursprünglichen Frischbetons wie beispielsweise Kiesel und dergleichen können für die erneute Betonproduktion genutzt werden.

Sämtliche Feinteilchen oder Feinpartikel, welche insbesondere einen Durchmesser von weniger als 0,2 mm haben, werden jedoch mit dem Wasser ausgespült und gesammelt. Da sich bei jedem Spül- oder Reinigungsvorgang dieses Wasser immer mehr mit Feinteilchen und Partikeln anreichert, steigt die Wasserdichte an. Daher kann dieses sogenannte Betonrestwasser nicht endlos zum Spülen des ausgewaschenen Frischbetons verwendet werden. Betreiber derartiger Recyclinganlagen sind daher gezwungen, diesem Reinigungskreislauf täglich frisches Wasser zuzuführen. Dadurch nimmt die Menge an Betonrestwasser ständig zu.

Das Betonrestwasser kann nur innerhalb enger Grenzen, und zwar abhängig von einer Dichte desselben, für die Betonproduktion genutzt werden. Darüber hinaus bleiben große Mengen an Betonrestwasser übrig, die nicht weiter verwendet werden können. Da es verboten ist, das Betonrestwasser der Kanalisation zuzuführen, ist nur eine aufwendige und teure Entsorgung dieses Betonrestwassers durch Spezialunternehmen möglich. Hier können Kosten von mehreren hundert Euro pro Tonne sedimentierter Feststoffe anfallen.

Es ist daher eine Aufgabe der vorliegenden Erfindung, ein Verfahren und ein System der eingangs beschriebenen Art so zu verbessern, dass die Menge der zu entsorgenden, nicht weiter verwertbaren sedimentierbaren Stoffe verringert wird.

Diese Aufgabe wird bei einem Verfahren der eingangs beschriebenen Art erfindungsgemäß dadurch gelöst, dass die Feststoffkörper zu Feststoffkörnern zerkleinert werden oder dass die Feststoffkörper in Form von Feststoffkörnern ausgebildet werden.

Die erfindungsgemäß vorgeschlagene Weiterbildung ermöglicht es insbesondere, die bislang als Sondermüll zu entsorgenden sedimentierbaren Feststoffe weiter zu nutzen, insbesondere für die Betonproduktion. Dazu werden wie vorgeschlagen die Feststoffkörper, die aus dem sedimentierbaren Feststoff ausgebildet werden, zerkleinert, um Feststoffkörner auszubilden, die als größere Bestandteile bei der Produktion von Beton, insbesondere vonFrischbeton, eingesetzt werden können. Alternativ ist es auch möglich, die Feststoffkörper bereits in Form von Feststoffkörnern auszubilden. Dadurch kann optional auf den Schritt des Verkleinerns der Feststoffkörper verzichtet. Beispielsweise können die Feststoffkörper in Kieselgröße ausgebildet werden, um so einen Teil des zur Herstellung von Beton erforderlichen Kieses zu ersetzen. Insbesondere werden plattenförmige Feststoffkörper, die aus den getrennten oder entfernten sedimentierbaren Feststoffen ausgebildet werden, in gewünschter Weise zerkleinert werden. Das Entsorgen derartiger Feststoffkörperplatten ist dann nicht mehr erforderlich. Eine Form der Feststoffkörner kann grundsätzlich beliebig sein. Unregelmäßig geformte, zerklüftete Feststoffkörner sind ebenso möglich wie kugelförmige, eiförmige oder quaderförmige oder im Wesentlichen kugelförmige, eiförmige oder quaderförmige Feststoffkörner. Ferner ist es optional auch möglich, das Verfahren ohne die Schritte des Sammelns und des Reinigens sowie des Ausbildens von Feststoffkörper durchzuführen. Die Verwertbarkeit der sedimentierbaren Feststoffe ergibt sich insbesondere durch die Formung von Feststoffkörner aus denselben beziehungsweise durch das Zerkleinern der Feststoffkörper zu Feststoffkörnern gewünschter Größe.

Vorteilhaft ist es, wenn die Feststoffkörner mit einer mittleren Korngröße in einem Bereich von etwa 4 mm bis etwa 50 mm durch Zerkleinern hergestellt oder ausgebildet werden. Insbesondere können sie mit einer mittleren Korngröße in einem Bereich von etwa 6 mm bis etwa 25 mm durch Zerkleinern hergestellt oder durch entsprechende Formung ausgebildet werden. Derartige Feststoffkörner können insbesondere als Kiesersatz zur Herstellung von Festbeton eingesetzt werden.

Vorzugsweise wird die mittlere Korngröße vorgegeben. So können gezielt Ersatzstoffe für die Betonproduktion aus den sedimentierbaren Feststoffen ausgebildet werden.

Auf einfache Weise lassen sich die Feststoffkörper zerkleinern, wenn sie mechanisch zerkleinert werden. Insbesondere kann dies durch Einwirken von Brecherwalzen oder Pressenstempeln erfolgen.

Um die sedimentierbaren Feststoffe möglichst gleichmäßig verteilt im Betonrestwasser zu halten, ist es günstig, wenn das gesammelte Betonrestwasser in Bewegung gehalten wird. Insbesondere kann dies durch Rühren erfolgen.

Günstig ist es, wenn die Abtrennung sedimentierbarer Feststoffe aus dem Betonrestwasser in mindestens einem Abtrennschritt oder in mindestens einer Abtrennstufe durchgeführt wird. Um insbesondere eine Dichte des Betonrestwassers weiter abzusenken, ist es günstig, wenn zwei, drei oder mehr derartige Abtrennschritte oder Abtrennstufen vorgesehen werden.

Vorzugsweise werden sedimentierbare Feststoffe in Form von Fein- und/oder Schwebepartikeln aus dem Betonrestwasser abgetrennt oder entfernt. Diese haben vorzugsweise einen mittleren Durchmesser von maximal 0,5 mm, insbesondere von maximal 0,2 mm.

Vorteilhaft ist es, wenn sedimentierbare Feststoffe aus dem Betonrestwasser durch Schräg- und/oder Lamellenklärer und/oder Hydrozyklone abgetrennt oder entfernt werden. Mit derartigen Einrichtungen lassen sich die sedimentierbaren Feststoffe auf einfache Weise aus dem Betonrestwasser abtrennen oder entfernen.

Günstig ist es, wenn die abgetrennten oder entfernten sedimentierbaren Feststoffe zum Ausbilden von Feststoffkörpern oder Feststoffkörnern gepresst oder verpresst werden. Beispielsweise können die sedimentierbaren Feststoffe zu Feststoffkörpern in Form von Platten verpresst werden. Diese lassen sich gegebenenfalls für die Weiterbearbeitung lagern. Ferner können auch direkt Feststoffkörner durch Pressen ausgebildet werden, beispielsweise durch Hindurchpressen durch entsprechende Matrizen oder durch Einfüllen und Verpressen in entsprechenden Formen. So können Feststoffkörner in gewünschter Größe und Form auf einfache Weise ausgebildet werden.

Vorteilhafterweise werden die abgetrennten sedimentierbaren Feststoffe getrocknet. Auf diese Weise können sie möglichst wasserarm oder sogar nahezu wasserfrei weiter verarbeitet werden.

Günstig ist es, wenn die Feststoffkörper vor dem Zerkleinern oder wenn die Feststoffkörner getrocknet werden. So sind die Feststoffkörper vor dem Zerkleinern zwar härter, wenn sie getrocknet sind, backen jedoch weniger leicht zusammen, was insbesondere passieren kann, wenn sie noch eine gewisse Restfeuchte aufweisen.

Um das Ausbilden von Feststoffkörpern und Feststoffkörnern zu verbessern, ist es günstig, wenn die abgetrennten sedimentierbaren Feststoffe vor dem Ausbilden von Feststoffkörpern eingedickt werden.

Um das gereinigte Betonrestwasser insbesondere als gereinigtes Frischwasser, nachfolgend auch als Restwasser bezeichnet, weiter nutzen und gegebenenfalls auch direkt der Kanalisation zuführen zu können, ist es günstig, wenn das gereinigte Betonrestwasser gefiltert wird.

Um insbesondere einen geschlossenen Verfahrenskreislauf ausbilden zu können, ist es vorteilhaft, wenn das gereinigte Betonrestwasser als Restwasser gesammelt und/oder gespeichert wird. Insbesondere kann es in einen Restwassersammelbehälter gespeichert werden. Dabei kann es sich insbesondere um ein Becken oder einen Tank handeln.

Insbesondere kann es vorteilhaft sein, wenn eine Dichte des Restwassers gemessen wird. So kann insbesondere sichergestellt werden, dass das gesammelte und gespeicherte Restwasser eine bestimmte Wasserdichte nicht überschreitet, die zur Herstellung von Frischbeton nicht zulässig wäre.

Um beim Verfahren zum Aufbereiten von Betonrestwasser möglichst wenig Frischwasser nutzen zu müssen, ist es günstig, wenn das Restwasser dem Betonrestwasser vor und/oder während der Reinigung zugeführt wird. Durch die Nutzung des gereinigten Betonrestwassers, also des Restwassers, kann Frischwasser eingespart werden. Das Restwasser kann dem Verfahren praktisch in jedem Schritt zugeführt werden, dem auch Frischwasser zugeführt würde.

Vorzugsweise wird der pH-Wert des Restwassers gemessen. Dadurch lässt sich feststellen, ob das Restwasser einen hohen oder basischen oder im Wesentlichen neutralen pH-Wert aufweist.

Ferner ist es vorteilhaft, wenn das Restwasser in Abhängigkeit des gemessenen pH-Werts neutralisiert oder im Wesentlichen neutralisiert wird. Insbesondere kann dies durch Zugabe einer Base folgen. Beispielsweise kann, wenn ein pH-Wert des Restwassers sehr sauer ist, nicht unüblich sind pH-Werte in der Größenordnung von etwa 2, kann durch Zugabe einer Base oder Lauge das Restwasser neutralisiert werden, das heißt dessen pH-Wert auf einen Wert in einem Bereich von etwa 6 bis 8, vorzugsweise auf einen Wert von etwa 7, eingestellt werden.

Ferner ist es günstig, wenn die Dichte des Betonrestwassers vor dem Reinigen und/oder beim Reinigen gemessen wird. Insbesondere kann diese Messung kontinuierlich oder diskontinuierlich erfolgen. Ein so gemessener Wasserdichte-Istwert kann dann genutzt werden, um dem Betonrestwasser beispielsweise gezielt Frischwasser oder Restwasser zuzuführen.

Gemäß einer weiteren bevorzugten Variante des Verfahrens kann vorgesehen sein, dass ein Wasserdichte-Sollwert des Betonrestwassers vorgegeben wird und dass das Betonrestwasser so lange gereinigt wird, bis ein gemessener Wasserdichte-Istwert des gereinigten Betonrestwassers dem Wasserdichte-Sollwert entspricht oder kleiner als der Wasserdichte-Sollwert ist. Durch diese Vorgehensweise lässt sich insbesondere erreichen, dass ein Wasserdichte-Istwert des Betonrestwassers stets einen Wasserdichte-Sollwert nicht oder nicht Wesentlich überschreitet.

Ferner ist es günstig, wenn den abgetrennten sedimentierbaren Feststoffen vor dem Ausbilden von Feststoffkörpern oder Feststoffkörnern mindestens ein Bindemittel zugegeben wird. Es können auch zwei, drei oder noch mehr unterschiedliche Bindemittel zugegeben werden. Das mindestens eine Bindemittel ermöglicht es insbesondere, Feststoffkörper oder Feststoffkörner mit höherer Festigkeit auszubilden. So kann insbesondere eine Formstabilität der Feststoffkörper und Feststoffkörner verbessert werden.

Günstig ist es, wenn dem ungereinigten Betonrestwasser mindestens ein Bindemittel zugegeben wird und/oder wenn dem Betonrestwasser beim Reinigen mindestens ein Bindemittel zugegeben wird. Das mindestens eine Bindemittel, wie beschrieben können es auch unterschiedliche oder mehrere Bindemittel sein, können bereits vor der Ausbildung von Feststoffkörpern oder Feststoffkörnern dem Betonrestwasser zugegeben werden. So kann eine besonders gute Durchmischung der sedimentierbaren Feststoffe mit Bindemittel erreicht werden.

Ferner ist es günstig, wenn den Feststoffkörnern mindestens ein Bindemittel zugegeben wird. So können insbesondere kleinere Feststoffkörner zu größeren Feststoffkörnern zusammengebunden werden.

Vorzugsweise wird als mindestens ein Bindemittel Zement zugegeben. Insbesondere kann frischer Zement zugegeben werden. Dies ermöglicht es insbesondere, die Feststoffkörner wieder für die Betonproduktion zu nutzen.

Ferner kann es günstig sein, wenn den Feststoffkörner vor und/oder nach dem Ausbilden derselben mindestens ein Füllstoff oder/oder mindestens ein Isolierstoff zugegeben wird. So können insbesondere Dämmstoffe oder Ausgangsstoffe für die Ziegeleiindustrie oder die Baustoffindustrie ausgebildet werden. Aus dem ursprünglich nicht mehr brauchbaren Abfallmaterial, das die sedimentierbaren Feststoffe darstellten, können nun hochwertige Roh- oder Ausgangsstoffe ausgebildet werden.

Günstig ist es, wenn die Feststoffkörper in Form von Platten ausgebildet werden. Insbesondere lassen sich die gereinigten und abgetrennten sedimentierbaren Feststoffe auf einfache Weise in Formen füllen und insbesondere Verpressen. Platten haben zudem den Vorteil, dass sie auf einfache Weise handhabbar und auch lagerbar sind, insbesondere in kompakter Weise.

Ferner wird die Verwendung nach einem der oben beschriebenen Verfahren hergestellten Feststoffkörner als Zuschlagstoff zum Herstellen von Beton, insbesondere Frischbeton, oder zum Herstellen von Straßenbelägen vorgeschlagen. So ist es insbesondere möglich, die sedimentierbaren Feststoffe, die aus dem Betonrestwasser abgetrennt oder entfernt werden, vollständig oder im Wesentlichen vollständig einer weiteren sinnvollen Nutzung zuzuführen. Eine kostenträchtige Entsorgung als Sondermüll kann so wirksam vermieden werden. Insbesondere vorgeschlagen wird auch die Verwendung von Feststoffkörner, die durch Zerkleinern von Feststoffkörpern oder durch entsprechende formbildende Herstellung ausgebildet werden, als Zuschlagstoff zum Herstellen von Beton, insbesondere Frischbeton, oder zum Herstellen von Straßenbelägen.

Die eingangs gestellte Aufgabe wird bei einem System der eingangs beschriebenen Art erfindungsgemäß dadurch gelöst, dass das System eine Zerkleinerungseinrichtung zum Zerkleinern der Feststoffkörper zu Feststoffkörnern umfasst oder das die Verfestigungseinrichtung ausgebildet ist zum Ausbilden von Feststoffkörpern in Form von Feststoffkörnern.

Ein derart weitergebildetes System ermöglicht es insbesondere, die ausgebildeten Feststoffkörper zu Zerkleinern und die so ausgebildeten Feststoffkörner weiter zu nutzen. Alternativ können mit der Verfestigungseinrichtung auch direkt Feststoffkörner ausgebildet werde. So lässt sich das Zerkleinern der Feststoffkörper zu Feststoffkörnern umgehen. Insbesondere kann das System auch nur die Verfestigungseinrichtung zum Ausbilden von Feststoffkörnern aus den sedimentierbaren Feststoffen oder die Zerkleinerungseinrichtung zum Zerkleinern von Feststoffkörpern aus sedimentierbaren Feststoffen umfassen.

Günstig ist es, wenn die Verfestigungseinrichtung und/oder Zerkleinerungseinrichtung ausgebildet sind zum Herstellen von Feststoffkörnern mit einer mittleren Korngröße im Bereich von etwa 4 mm bis etwa 50 mm. Insbesondere kann die Korngröße auch im Bereich von etwa 6 mm bis etwa 25 mm liegen. Die Weiterverwendung der Feststoffkörner kann insbesondere von ihrer mittleren Korngröße abhängen.

Vorzugsweise umfasst das System eine Eingabeeinrichtung zum Vorgeben der mittleren Korngröße der Feststoffkörner. Insbesondere kann die Eingabeeinrichtung mit der Verfestigungseinrichtung und/oder der Zerkleinerungseinrichtung zusammenwirkend ausgebildet sein, so dass Feststoffkörner mit der gewünschten mittleren Kerngröße durch Zerkleinern und/oder direkt durch Formgebung ausgebildet werden können.

Auf einfache Weise lassen sich die Feststoffkörper zerkleinern, wenn die Zerkleinerungseinrichtung in Form einer mechanischen Zerkleinerungseinrichtung ausgebildet ist. Insbesondere kann diese mindestens eine Brecherwalze und/oder mindestens einen Pressenstempel umfassen. Selbstverständlich können auch zwei, drei oder mehr Brecherwalzen und/oder Pressenstempel vorgesehen sein.

Um das Betonrestwasser in Bewegung zu halten, ist es vorteilhaft, wenn das System eine Bewegungseinrichtung zum Bewegen des gesammelten Betonrestwassers umfasst. Insbesondere kann die Bewegungseinrichtung in Form einer Rühreinrichtung ausgebildet sein.

Die Reinigungseinrichtung kann insbesondere einstufig ausgebildet sein. Vorteilhaft ist es, wenn sie mehrstufig ausgebildet ist. So lassen sich Feststoffe und insbesondere sedimentierbare Feststoffe noch gezielter und effektiver aus dem Betonrestwasser abtrennen oder entfernen.

Günstig ist es, wenn die Reinigungseinrichtung eine Abtrenneinrichtung zum Abtrennen sedimentierbarer Feststoffe in Form von Fein- und/oder Schwebepartikeln aus dem Betonrestwasser umfasst. Insbesondere können diese Fein- und/oder Schwebepartikel einen Durchmesser von maximal 0,5 mm, insbesondere maximal 0,2 mm aufweisen.

Auf einfache Weise lässt sich das Betonrestwasser reinigen, wenn die Reinigungseinrichtung mindestens einen Schrägklärer und/oder mindestens einen Lamellenklärer und/oder mindestens einen Hydrozyklon umfasst.

Zum Ausbilden von Feststoffkörpern ist es günstig, wenn das System eine Presseinrichtung zum Pressen oder Verpressen der abgetrennten oder entfernten sedimentierbaren Feststoffe zum Ausbilden von Feststoffkörpern oder Feststoffkörnern umfasst. Beim Pressen oder Verpressen der Feststoffkörper kann insbesondere noch weiter Wasser aus dem noch feuchten Material ausgepresst werden. Die sedimentierbaren Feststoffe lassen sich so einfach und sicher und in gewünschter Form befestigen.

Ferner ist es vorteilhaft, wenn das System eine Trocknungseinrichtung zum Trocknen der abgetrennten sedimentierbaren Feststoffe umfasst. Die Trocknungseinrichtung kann insbesondere ausgebildet sein, um die sedimentierbaren Feststoffe beispielsweise vor oder nach dem Zerkleinern zu trocknen.

Günstig ist es daher, wenn die Trocknungseinrichtung der Zerkleinerungseinrichtung vor- oder nachgeschaltet ist. Optional können auch mehrere Trocknungseinrichtungen vorgesehen sein, die die Feststoffkörper vor und die Feststoffkörner nach dem Zerkleinern trocknen.

Um einen Wassergehalt der sedimentierbaren Feststoffe vor dem Formen der Feststoffkörper zu verringern, ist es günstig, wenn das System eine Eindickungseinrichtung zum Eindicken der abgetrennten sedimentierbaren Feststoffe vor dem Ausbilden von Feststoffkörpern umfasst.

Vorzugsweise umfasst das System mindestens eine Filtereinrichtung zum Filtern des gereinigten Betonrestwassers. Mit der Filtereinrichtung lässt sich die Qualität des gereinigten Betonrestwassers, das wie bereits erwähnt auch als Restwasser bezeichnet wird, weiter verbessern. So kann es insbesondere der Betonproduktion oder auch dem System an jeder Stelle, wo sonst Frischwasser zugeführt werde müsste, zugeführt oder gegebenenfalls auch in die Kanalisation abgeleitet werden.

Günstig ist es, wenn das System eine Restwassersammel- und/oder Restwasserspeichereinrichtung zum Sammeln und/oder Speichern des gereinigten Betonrestwassers als Restwasser umfasst. Insbesondere kann die Restwassersammel- und/oder Restwasserspeichereinrichtung in Form eines Restwassersammelbehälters ausgebildet sein, beispielsweise als Tank oder Becken.

Vorteilhaft ist es, wenn das System eine erste Wasserdichtemesseinrichtung zum Messen einer Dichte des Restwassers in der Restwassersammel- und/oder Restwasserspeichereinrichtung umfasst. Die erste Wasserdichtemesseinrichtung ermöglicht es insbesondere, eine Wasserdichte des Restwassers zu messen und so Rückschlüsse auf eine Qualität des Restwassers zu ziehen.

Ferner kann es vorteilhaft sein, wenn das System eine Restwasserzuführeinrichtung zum Zuführen von Restwasser von der Restwassersammel- und/oder Restwasserspeichereinrichtung zur Sammeleinrichtung und/oder zur Reinigungseinrichtung umfasst. Insbesondere kann die Restwasserzuführeinrichtung in Form eines Leitungssystems ausgebildet sein, welches eine oder mehrere Pumpen zum Fördern des Restwassers umfasst.

Vorteilhaft ist es, wenn das System eine pH-Wert-Messeinrichtung zum Messen eines pH-Werts des Restwassers umfasst. Insbesondere kann die pH-Wert-Messeinrichtung in oder an der Restwassersammel- und/oder Restwasserspeichereinrichtung angeordnet oder ausgebildet sein. So lässt sich ein pH-Wert des Restwassers bestimmen, um dann zu entscheiden, ob es erforderlich ist, das Restwasser zu neutralisieren, beispielsweise, wenn dieses stark sauer ist. Insbesondere kann eine solche Neutralisation auch automatisiert erfolgen.

Vorzugsweise umfasst das System eine Neutralisationseinrichtung zum Neutralisieren oder im Wesentlichen zum Neutralisieren des Restwassers. Insbesondere kann das Neutralisieren in Abhängigkeit des mit der pH-Wert-Messeinrichtung gemessenen pH-Werts automatisch erfolgen. Beispielsweise kann die Neutralisationseinrichtung eine Dosiereinrichtung umfassen zum Dosieren von Säuren und/oder Laugen zum Neutralisieren von basischem oder saurem Restwasser.

Gemäß einer weiteren bevorzugten Ausführungsform der Erfindung kann vorgesehen sein, dass das System eine zweite Wasserdichtemesseinrichtung zum Messen einer Dichte des Betonrestwassers in der Reinigungseinrichtung umfasst. Insbesondere kann die zweite Wwasserdichtemesseinrichtung in Form einer kontinuierlich oder diskontinuierlich messenden zweiten Wasserdichtemesseinrichtung ausgebildet sein. Die zweite Wasserdichtemesseinrichtung kann insbesondere genutzt werden, um abhängig von der gemessenen Wasserdichte die Zugabe von Frischwasser oder Restwasser zu steuern und/oder zu regeln.

Vorteilhaft ist es, wenn das System eine Wasserdichte-Sollwert-Vorgabeeinrichtung zum Vorgeben eines Wasserdichte-Sollwerts des Betonrestwassers und eine mit der Wasserdichte-Sollwert-Vorgabeeinrichtung zusammenwirkende Steuer- und/oder Regelungseinrichtung zum Steuern und/oder Regeln der Reinigungseinrichtung derart umfasst, dass das Betonrestwasser so lange gereinigt wird, bis ein mit der ersten oder zweiten Wasserdichtemesseinrichtung gemessener Wasserdichte-Istwert des gereinigten Betonrestwassers dem Wasserdichte-Sollwert entspricht oder kleiner als der Wasserdichte-Sollwert ist. Beispielsweise kann die Einstellung des Wasserdichte-Istwerts durch Zugabe von Frisch- und/oder Restwasser eingestellt werden. Insbesondere kann die Steuer- und/oder Regelungseinrichtung zu diesem Zweck mit einer Frischwasser- oder der Restwasserzuführeinrichtung zusammenwirkend angeordnet oder ausgebildet sein.

Ferner ist es vorteilhaft, wenn das System eine Bindemittelzuführeinrichtung zum Zugeben mindestens eines Bindemittels zu den abgetrennten sedimentierbaren Feststoffen vor und/oder nach dem Ausbilden von Feststoffkörpern oder Feststoffkörnern umfasst. Die Bindemittelzuführeinrichtung ermöglicht es insbesondere, ein oder mehrere Bindemittel oder Bindemittelmischungen den Feststoffen zuzugeben, um formstabilere und festere Feststoffkörper oder Feststoffkörner auszubilden.

Vorteilhaft ist es, wenn die Bindemittelzuführeinrichtung mit der Sammeleinrichtung und/oder der Reinigungseinrichtung in fluidwirksamer Verbindung steht. Dies ermöglicht es insbesondere, dem gesammelten Betonrestwasser in der Sammeleinrichtung oder beim Reinigen des Betonrestwassers Bindemittel zuzuführen.

Vorzugsweise ist die Bindemittelzuführeinrichtung in Form einer Zementzuführeinrichtung ausgebildet. Dies ermöglicht es insbesondere, Bindemittel in Form von Zement dem Betonrestwasser in jeder Stufe des oben beschriebenen Verfahrens zuzuführen.

Ferner ist es vorteilhaft, wenn das System eine Füllstoff- und/oder Isolierstoffzuführeinrichtung zum Zugeben mindestens eines Füllstoffs und/oder mindestens eines Isolierstoffs zu den Feststoffkörnern vor und/oder nach dem Ausbilden derselben umfasst. Denkbar sind hierbei insbesondere alle Arten von Füllstoffen oder Isolierstoffen, die zur Ausbildung von Dämmstoffen oder Ausgangsstoffen für die Ziegeleiindustrie oder die Baustoffindustrie denkbar sind.

Auf einfache Weise lassen sich Feststoffkörperplatten ausbilden, wenn die Verfestigungseinrichtung in Form einer Plattenverfestigungseinrichtung zum Ausbilden der Feststoffkörper in Form von Platten ausgebildet ist. Beispielsweise kann die Verfestigungseinrichtung in Form einer Plattenpresse ausgebildet sein.

Ferner wird die Verwendung eines der oben beschriebenen Systeme zur Durchführung eines der oben beschriebenen Verfahren vorgeschlagen. Insbesondere lässt sich das System als geschlossenes System oder im Wesentlichen geschlossenes System ausbilden beziehungsweise betreiben. So lässt sich die Menge des für die Aufbereitung des Betonrestwassers erforderlichen Frischwassers signifikant reduzieren.

Alle oben beschriebenen Zuführeinrichtungen können insbesondere in Form von Dosiereinrichtungen ausgebildet sein, mit denen eine Menge der jeweils zuzugebenden oder zuzuführenden Stoffe dosiert werden kann. Insbesondere können die Zuführeinrichtungen mit der Steuer- und/oder Regelungseinrichtung zusammenwirkend ausgebildet sein, um eine Zugabe der jeweiligen Stoffe zu steuern und/oder zu regeln.

Die vorstehende Beschreibung umfasst somit insbesondere die nachfolgend in Form durchnummerierter Sätze definierten Ausführungsformen von Verfahren und Systemen zur Aufbereitung von Betonrestwasser:
1. Verfahren zur Aufbereitung von Betonrestwasser (12), welches bei der Frischbetonproduktion als Abwasser (14) anfällt und frischen Rück- oder Restbeton enthält, bei welchem Verfahren Betonrestwasser (12) gesammelt und gereinigt wird, beim Reinigen des Betonrestwassers (12) in diesem enthaltene sedimentierbare Feststoffe (30) abgetrennt oder entfernt werden und aus den abgetrennten oder entfernten sedimentierbaren Feststoffen (30) Feststoffkörper (34) ausgebildet werden, dadurch gekennzeichnet, dass die Feststoffkörper (34) zu Feststoffkörnern (38)zerkleinert werden oder dass die Feststoffkörper (34) in Form von Feststoffkörnern (38) ausgebildet werden.
2. Verfahren nach Satz 1, dadurch gekennzeichnet, dass die Feststoffkörner (38) mit einer mittleren Korngröße in einem Bereich von etwa 4 mm bis etwa 50 mm, insbesondere in einem Bereich von etwa 6 mm bis etwa 25 mm, durch Zerkleinern hergestellt oder ausgebildet werden.
3. Verfahren nach Satz 2, dadurch gekennzeichnet, dass die mittlere Korngröße vorgegeben wird.
4. Verfahren nach einem der voranstehenden Sätze, dadurch gekennzeichnet, dass die Feststoffkörper (34) mechanisch zerkleinert werden, insbesondere durch Einwirken von Brecherwalzen (56) oder Pressenstempeln (58).
5. Verfahren nach einem der voranstehenden Sätze, dadurch gekennzeichnet, dass das gesammelte Betonrestwasser (12) in Bewegung gehalten wird, insbesondere durch Rühren.
6. Verfahren nach einem der voranstehenden Sätze, dadurch gekennzeichnet, dass die Abtrennung sedimentierbarer Feststoffe (30) aus dem Betonrestwasser in mindestens einem Abtrennschritt oder in mindestens einer Abtrennstufe durchgeführt wird.
7. Verfahren nach einem der voranstehenden Sätze, dadurch gekennzeichnet, dass sedimentierbare Feststoffe (30) in Form von Fein- und/oder Schwebepartikeln aus dem Betonrestwasser (12) abgetrennt oder entfernt werden.
8. Verfahren nach einem der voranstehenden Sätze, dadurch gekennzeichnet, dass sedimentierbare Feststoffe (30) aus dem Betonrestwasser (12) durch Schräg- und/oder Lamellenklärer und/oder Hydrozyklon abgetrennt oder entfernt werden.
9. Verfahren nach einem der voranstehenden Sätze, dadurch gekennzeichnet, dass die abgetrennten oder entfernten sedimentierbaren Feststoffe (30) zum Ausbilden von Feststoffkörpern (34) oder Feststoffkörnern (38) gepresst oder verpresst werden.
10. Verfahren nach einem der voranstehenden Sätze, dadurch gekennzeichnet, dass die abgetrennten sedimentierbaren Feststoffe (30) getrocknet werden.
11. Verfahren nach einem der voranstehenden Sätze, dadurch gekennzeichnet, dass die Feststoffkörper (34) vor dem Zerkleinern oder dass die Feststoffkörner (38) getrocknet werden.
12. Verfahren nach einem der voranstehenden Sätze, dadurch gekennzeichnet, dass die abgetrennten sedimentierbaren Feststoffe (30) vor dem Ausbilden von Feststoffkörpern (34) eingedickt werden.
13. Verfahren nach einem der voranstehenden Sätze, dadurch gekennzeichnet, dass das gereinigte Betonrestwasser (12) gefiltert wird.
14. Verfahren nach einem der voranstehenden Sätze, dadurch gekennzeichnet, dass das gereinigte Betonrestwasser (12) als Restwasser (40) gesammelt und/oder gespeichert wird, insbesondere in einem Restwassersammelbehälter (82).
15. Verfahren nach Satz 14, dadurch gekennzeichnet, dass eine Dichte des Restwassers (40) gemessen wird.
16. Verfahren nach Satz 14 oder 15, dadurch gekennzeichnet, dass das Restwasser (40) dem Betonrestwasser (12) vor und/oder während der Reinigung zugeführt wird.
17. Verfahren nach einem der Sätze 14 bis 16, dadurch gekennzeichnet, dass ein pH-Wert des Restwassers (40) gemessen wird.
18. Verfahren nach Satz 17, dadurch gekennzeichnet, dass das Restwasser (40) in Abhängigkeit des gemessenen pH-Werts neutralisiert oder im Wesentlichen neutralisiert wird, insbesondere durch Zugabe einer Base.
19. Verfahren nach einem der voranstehenden Sätze, dadurch gekennzeichnet, dass die Dichte des Betonrestwassers (12) vor dem Reinigen und/oder beim Reinigen gemessen wird, insbesondere kontinuierlich oder diskontinuierlich.
20. Verfahren nach einem der voranstehenden Sätze, dadurch gekennzeichnet, dass ein Wasserdichte-Sollwert des Betonrestwassers (12) vorgegeben wird und dass das Betonrestwasser (12) so lange gereinigt wird, bis ein gemessener Wasserdichte-Istwert des gereinigten Betonrestwassers (12) dem Wasserdichte-Sollwert entspricht oder kleiner als der Wasserdichte-Sollwert ist.
21. Verfahren nach einem der voranstehenden Sätze, dadurch gekennzeichnet, dass den abgetrennten sedimentierbaren Feststoffen (30) vor dem Ausbilden von Feststoffkörpern (34) oder Feststoffkörnern (38) mindestens ein Bindemittel zugegeben wird.
22. Verfahren nach einem der voranstehenden Sätze, dadurch gekennzeichnet, dass dem ungereinigten Betonrestwasser (12) mindestens ein Bindemittel zugegeben wird und/oder dass dem Betonrestwasser (12) beim Reinigen mindestens ein Bindemittel zugegeben wird.
23. Verfahren nach einem der voranstehenden Sätze, dadurch gekennzeichnet, dass den Feststoffkörnern (38) mindestens ein Bindemittel zugegeben wird.
24. Verfahren nach einem der Sätze 21 bis 23, dadurch gekennzeichnet, dass als mindestens ein Bindemittel Zement, insbesondere frischer Zement, zugegeben wird.
25. Verfahren nach einem der voranstehenden Sätze, dadurch gekennzeichnet, dass den Feststoffkörnern (38) vor und/oder nach dem Ausbilden derselben mindestens ein Füllstoff und/oder mindestens ein Isolierstoff zugegeben wird.
26. Verfahren nach einem der voranstehenden Sätze, dadurch gekennzeichnet, dass die Feststoffkörper (34) in Form von Platten ausgebildet werden.
27. Verwendung gemäß einem Verfahren nach einem der voranstehenden Sätze hergestellter Feststoffkörner (38) als Zuschlagstoff zum Herstellen von Beton, insbesondere Frischbeton, oder zum Herstellen von Straßenbelägen.
28. System zur Aufbereitung (10) von Betonrestwasser (12), welches bei der Frischbetonproduktion als Abwasser (14) anfällt und frischen Rück- oder Restbeton enthält, umfassend eine Sammeleinrichtung (16) zum Sammeln des Betonrestwassers (12) und eine Reinigungseinrichtung (28) zum Reinigen des Betonrestwassers (12), welche Reinigungseinrichtung (28) ausgebildet ist zum Reinigen des Betonrestwassers (12) durch Abtrennen von Feststoffen, welches System ferner eine Verfestigungseinrichtung (32) zum Ausbilden von Feststoffkörpern (34) aus den abgetrennten Feststoffen (30) umfasst, dadurch gekennzeichnet, dass das System (10) eine Zerkleinerungseinrichtung (36) zum Zerkleinern der Feststoffkörper (34) zu Feststoffkörnern (38) umfasst oder dass die Verfestigungseinrichtung (32) ausgebildet ist zum Ausbilden der Feststoffkörper (34) in Form von Feststoffkörnern (38).
29. System nach Satz 28, dadurch gekennzeichnet, dass die Verfestigungseinrichtung (32) und/oder die Zerkleinerungseinrichtung (36) ausgebildet sind zum Herstellen von Feststoffkörnern (38) mit einer mittleren Korngröße in einem Bereich von etwa 4 mm bis etwa 50 mm, insbesondere in einem Bereich von etwa 6 mm bis etwa 25 mm.
30. System nach Satz 29, gekennzeichnet durch eine Eingabeeinrichtung (54) zum Vorgeben der mittleren Korngröße der Feststoffkörner (38).
31. System nach einem der Sätze 28 bis 30, dadurch gekennzeichnet, dass die Zerkleinerungseinrichtung (36) in Form einer mechanischen Zerkleinerungseinrichtung (36) ausgebildet ist, welche insbesondere mindestens eine Brecherwalze (56) und/oder mindestens einen Pressenstempel (58) umfasst.
32. System nach einem der einem der Sätze 28 bis 31, gekennzeichnet durch eine Bewegungseinrichtung (24) zum Bewegen des gesammelten Betonrestwassers (12), insbesondere in Form einer Rühreinrichtung (26).
33. System nach einem der einem der Sätze 28 bis 32, dadurch gekennzeichnet, dass die Reinigungseinrichtung (28) mehrstufig ausgebildet ist.
34. System nach einem der Sätze 28 bis 33, dadurch gekennzeichnet, dass die Reinigungseinrichtung (28) eine Abtrenneinrichtung (66) zum Abtrennen sedimentierbarer Feststoffe (30) in Form von Fein- und/oder Schwebepartikeln aus dem Betonrestwasser (12) umfasst.
35. System nach einem der Sätze 28 bis 34, dadurch gekennzeichnet, dass die Reinigungseinrichtung (28) mindestens einen Schräg- und/oder mindestens einen Lamellenklärer und/oder mindestens einen Hydrozyklon umfasst.
36. System nach einem der Sätze 28 bis 35, gekennzeichnet durch eine Presseinrichtung (72) zum Pressen oder Verpressen der abgetrennten oder entfernten sedimentierbaren Feststoffe (30) zum Ausbilden von Feststoffkörpern (34) oder Feststoffkörnern (38).
37. System nach einem der Sätze 28 bis 36, gekennzeichnet durch eine Trocknungseinrichtung (74) zum Trocknen der abgetrennten sedimentierbaren Feststoffe (30).
38. System nach Satz 37, dadurch gekennzeichnet, dass die Trocknungseinrichtung (74) der Zerkleinerungseinrichtung (36) vor- oder nachgeschaltet ist.
39. System nach einem der Sätze 28 bis 38, gekennzeichnet durch eine Eindickungseinrichtung (76) zum Eindicken der abgetrennten sedimentierbaren Feststoffe (30) vor dem Ausbilden von Feststoffkörpern (34).
40. System nach einem der Sätze 28 bis 39, gekennzeichnet durch mindestens eine Filtereinrichtung (78) zum Filtern des gereinigten Betonrestwassers (12).
41. System nach einem der Sätze 28 bis 40, gekennzeichnet durch eine Restwassersammel- und/oder Restwasserspeichereinrichtung (80) zum Sammeln und/oder Speichern des gereinigten Betonrestwassers (12) als Restwasser (40), insbesondere in Form eines Restwassersammelbehälter (82).
42. System nach Satz 41, gekennzeichnet durch eine erste Wasserdichtemesseinrichtung (84) zum Messen einer Dichte des Restwassers (40) in der Restwassersammel- und/oder Restwasserspeichereinrichtung (80).
43. System nach Satz 41 oder 42, gekennzeichnet durch eine Restwasserzuführeinrichtung (86) zum Zuführen von Restwasser (40) von der Restwassersammel- und/oder Restwasserspeichereinrichtung (80) zur Sammeleinrichtung (16) und/oder zur Reinigungseinrichtung (28).
44. System nach einem der Sätze 41 bis 43, gekennzeichnet durch eine pH-Wert-Messeinrichtung (88) zum Messen eines pH-Werts des Restwassers (40), insbesondere in der Restwassersammel- und/oder Restwasserspeichereinrichtung (80).
45. System nach einem der Sätze 41 bis 44, gekennzeichnet durch eine Neutralisationseinrichtung (90) zum Neutralisieren oder im Wesentlichen Neutralisieren des Restwassers (40), insbesondere in Abhängigkeit des gemessenen pH-Werts.
46. System nach einem der Sätze 28 bis 45, gekennzeichnet durch eine zweite Wasserdichtemesseinrichtung (42) zum Messen einer Dichte des Betonrestwassers (12) in der Reinigungseinrichtung (28), insbesondere in Form einer kontinuierlich oder diskontinuierlich messenden zweiten Wasserdichtemesseinrichtung (42).
47. System nach Satz 46, gekennzeichnet durch eine Wasserdichte-Sollwert-Vorgabeeinrichtung (92) zum Vorgeben eines Wasserdichte-Sollwerts des Betonrestwassers (12) und eine mit der Wasserdichte-Sollwert-Vorgabeeinrichtung zusammenwirkende Steuer- und/oder Regelungseinrichtung (52) zum Steuern und/oder Regeln der Reinigungseinrichtung(28) derart, dass das Betonrestwasser (12) so lange gereinigt wird, bis ein mit der ersten oder zweiten Wasserdichtemesseinrichtung (42, 84) gemessener Wasserdichte-Istwert des gereinigten Betonrestwassers (12, 40) dem Wasserdichte-Sollwert entspricht oder kleiner als der Wasserdichte-Sollwert ist.
48. System nach einem der Sätze 28 bis 47, gekennzeichnet durch eine Bindemittelzuführeinrichtung (44) zum Zugeben mindestens eines Bindemittels zu den abgetrennten sedimentierbaren Feststoffen (30) vor und/oder nach dem Ausbilden von Feststoffkörpern (34) oder Feststoffkörnern (38).
49. System nach Satz 48, dadurch gekennzeichnet, dass die Bindemittelzuführeinrichtung (44) mit der Sammeleinrichtung (16) und/oder der Reinigungseinrichtung (28) in fluidwirksamer Verbindung steht.
50. System nach Satz 48 oder 49, dadurch gekennzeichnet, dass die Bindemittelzuführeinrichtung (44) in Form einer Zementzuführeinrichtung ausgebildet ist.
51. System nach einem der Sätze 28 bis 50, gekennzeichnet durch eine Füllstoff- und/oder Isolierstoffzuführeinrichtung (94) zum Zugeben mindestens eines Füllstoffs und/oder mindestens eines Isolierstoffs zu den Feststoffkörnern (38) vor und/oder nach dem Ausbilden derselben.
52. System nach einem der Sätze 28 bis 51, dadurch gekennzeichnet, dass die Verfestigungseinrichtung (32) in Form einer Plattenverfestigungseinrichtung (48) zum Ausbilden der Feststoffkörper (34) in Form von Platten ausgebildet ist.
53. Verwendung eines Systems nach einem der Sätze 28 bis 52 zur Durchführung eines Verfahrens nach einem der Sätze 1 bis 26.

Die nachfolgende Beschreibung bevorzugter Ausführungsformen der Erfindung dient im Zusammenhang mit den Zeichnungen der näheren Erläuterung. Es zeigen:
- Figur 1:: eine schematische Darstellung eines erfindungsgemäßen Systems;
- Figur 2:: eine schematische Darstellung eines zweiten Ausführungsbeispiels eines erfindungsgemäßen Systems;
- Figur 3:: eine schematische Darstellung des Ablaufs einer Variante eines erfindungsgemäßen Verfahrens; und
- Figur 4:: eine schematische Darstellung des Ablaufs einer weiteren Variante eines erfindungsgemäßen Verfahrens.

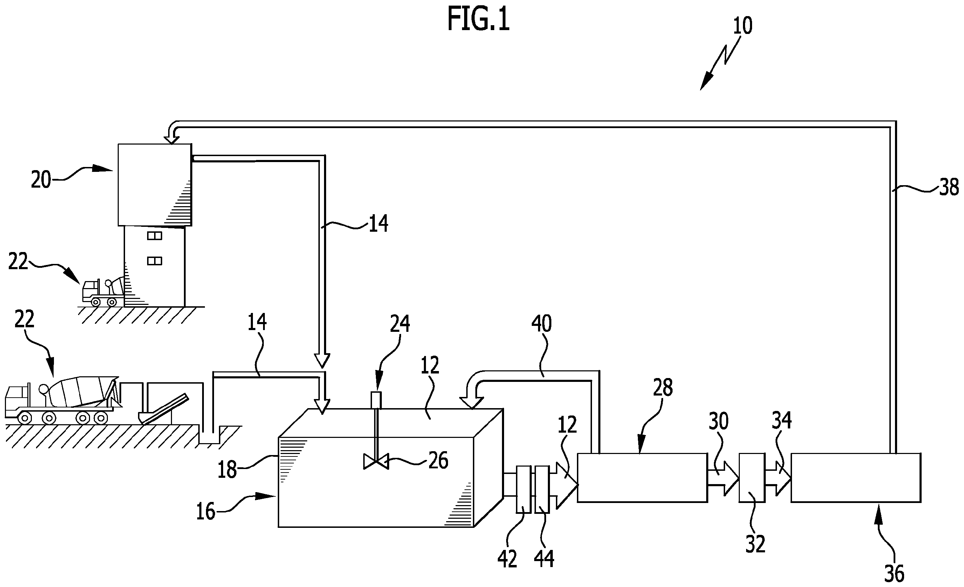

In Figur 1 ist schematisch ein insgesamt mit dem Bezugszeichen 10 bezeichnetes System zur Aufbereitung von Betonrestwasser 12 dargestellt, welches bei der Frischbetonproduktion als Abwasser 14 anfällt und frischen Rück- oder Restbeton enthält.

Das System 10 umfasst eine Sammeleinrichtung 16 in Form eines Sammelbeckens 18 zum Sammeln des Betonrestwassers 12.

Zum Reinigen einer Betonmischanlage 20 oder eines Lkw-Fahrmischers 22 wird Wasser genutzt, insbesondere Frischwasser, um noch nicht abgebundenen Beton aus der Betonmischanlage 20 oder dem Lkw-Fahrmischer 22 auszuspülen. Das Abwasser 14 wird in das Sammelbecken 18 geleitet und dort zwischengespeichert.

Das Betonrestwasser 12 wird in der Sammeleinrichtung 16 mit einer Bewegungseinrichtung 24 bewegt, um Feinpartikel im Betonrestwasser 12 in der Schwebe zu halten und eine Verschlammung der Sammeleinrichtung 16 zu verhindern. Die Bewegungseinrichtung 24 kann insbesondere in Form einer Rühreinrichtung 26 ausgebildet sein.

Das Betonrestwasser 12 wird aus der Sammeleinrichtung 16 zu einer Reinigungseinrichtung 28 zum Reinigen des Betonrestwassers 12 geleitet. Die Reinigungseinrichtung 28 ist ausgebildet zum Reinigen des Betonrestwassers 12 durch Abtrennen von sedimentierbaren Feststoffen30 . Sie kann insbesondere ein- oder mehrstufig ausgebildet sein.

Die abgetrennten oder entfernten, sedimentierbaren Feststoffe 30 werden einer Verfestigungseinrichtung 32 zugeführt. Die Verfestigungseinrichtung 32 bildet aus den abgetrennten Feststoffen 30 Feststoffkörper 34.

Die Feststoffkörper 34 werden von der Verfestigungseinrichtung 32 an eine vom System 10 umfasste Zerkleinerungseinrichtung 36 übergeben. Die Zerkleinerungseinrichtung 36 ist ausgebildet zum Zerkleinern der Feststoffkörper 34 in Feststoffkörner 38. Diese Feststoffkörner 38 können wiederum der Betonmischanlage 20 als Rohstoff zugeführt werden.

Das gereinigte und zum größten Teil von den sedimentierbaren Feststoffen befreite Betonrestwasser 12 wird als sogenanntes Restwasser 40 der Sammeleinrichtung 16 zugeführt. Dadurch kann die Dichte des in der Sammeleinrichtung 16 gesammelten Betonrestwassers 12 erniedrigt werden.

Optional kann das System 10 eine Wasserdichtemesseinrichtung 42 umfassen. Mit dieser kann die Wasserdichte des Betonrestwassers 12 in der Sammeleinrichtung 16 oder beim Zuleiten zur Reinigungseinrichtung 28 oder in der Reinigungseinrichtung 28 gemessen werden.

Ferner kann optional eine Bindemittelzuführeinrichtung 44 vorgesehen sein zum Zugeben mindestens eines Bindemittels, beispielsweise zum Betonrestwasser 12 vor dem Zuführen zur Reinigungseinrichtung 28.

Wie aus der schematischen Darstellung in Figur 1 zu erkennen, ermöglicht es das System 10 sowohl das zum Reinigen einer Betonmischanlage 20 oder eines Lkw-Fahrmischers 22 verwendete und mit frischem Rück- oder Restbeton angereicherte Abwasser 14 zu reinigen und sowohl die im Abwasser 14 sedimentierbaren Feststoffe 30 als auch das Restwasser 40 im Wesentlichen vollständig weiterzuverwenden. So lässt sich insbesondere ein geschlossener Kreislauf sowohl für das Wasser als auch für die sedimentierbaren Feststoffe 30 ausbilden. Die Menge an nicht weiterverwendbaren Abfällen bei der Betonproduktion lässt sich so signifikant reduzieren.

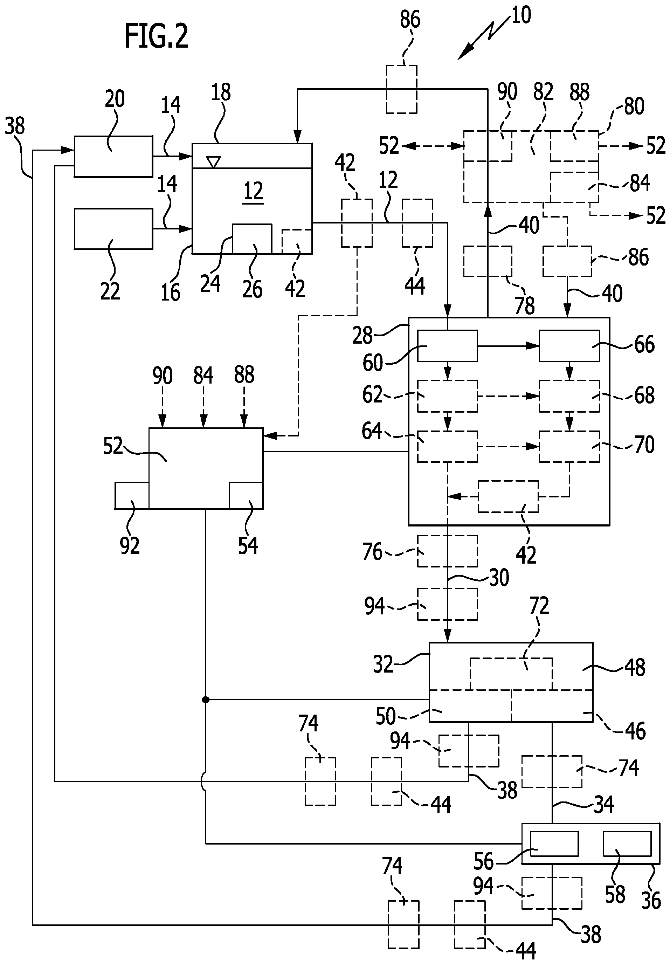

In Figur 2 ist der schematische Aufbau des Systems 10 noch etwas detaillierter dargestellt. Die in Figur 1 dargestellten und oben beschriebenen Teile und Einrichtungen des Systems 10 sind in Figur 2 mit identischen Bezugszeichen bezeichnet. Optionale Einrichtungen und Bestandteile des Systems 10 sind in Figur 2 gestrichelt dargestellt.

Die Verfestigungseinrichtung 32 kann wie beschrieben eine Festkörpereinheit 46 umfassen zum Ausbilden von Feststoffkörpern 34. Beispielsweise kann die Festkörpereinheit 46 ausgebildet sein in Form eines Plattenverfestigers 48 zum Ausbilden von plattenförmigen Feststoffkörpern 34.

Die Verfestigungseinrichtung 32 kann ferner auch eine Feststoffkörnerreinheit 50 umfassen. In dieser werden aus den sedimentierbaren Feststoffen 30 direkt Feststoffkörner 38 ausgebildet. Insbesondere kann die Feststoffkörnereinheit 50 geeignete Matrizen zum Erzeugen von beispielsweise pelletförmigen Feststoffkörnern 38 umfassen, durch die die angereicherten sedimentierbaren Feststoffe 30 hindurchgedrückt werden. Auch andere Formen zur Ausbildung von Feststoffkörnern 38 sind denkbar, beispielsweise Formen, in die die sedimentierbaren Feststoffe 30 eingefüllt und zu Feststoffkörnern 38, beispielsweise in Kieselform, gepresst werden.

Umfasst das System 10 eine Feststoffkörnereinheit 50, kann optional auch auf die Zerkleinerungseinrichtung 36 verzichtet werden.

Die Verfestigungseinrichtung 32 sowie die Zerkleinerungseinrichtung 36 sind vorzugsweise ausgebildet zum Herstellen von Feststoffkörnern 38 mit einer mittleren Korngröße in einem Bereich von etwa 4 mm bis etwa 50 mm. Günstigerweise liegt die mittlere Korngröße in einem Bereich von etwa 6 mm bis etwa 25 mm. Die Feststoffkörner 38 können so als kieselartiges Material der Frischbetonproduktion zugeführt werden.

Das System 10 kann insbesondere eine Steuer- und/oder Regelungseinrichtung 52 umfassen. Mit dieser zusammenwirkend oder von dieser umfasst kann ferner eine Eingabeeinrichtung 54 zum Vorgeben der mittleren Korngröße der Feststoffkörner 38 sein. Die Steuer- und/oder Regelungseinrichtung 52 ist daher optional mit der Verfestigungseinrichtung 32, insbesondere mit der Feststoffkörnereinheit 50, und mit der Zerkleinerungseinrichtung 36 zusammenwirkend ausgebildet. So kann ein Anwender des Systems 10 auf einfache Weise die gewünschte mittlere Korngröße vorgeben. Die Zerkleinerungseinrichtung 36 und auch die Verfestigungseinrichtung 32 zum Ausbilden von Feststoffkörnern 38 können dann mechanisch insbesondere derart angepasst werden, dass die ausgebildeten Feststoffkörner 38 die gewünschte mittlere Korngröße aufweisen.

Die Zerkleinerungseinrichtung 36 kann insbesondere in Form einer mechanischen Zerkleinerungseinrichtung 36 ausgebildet sein. Beispielsweise kann diese eine oder mehrere Brecherwalzen 56 und/oder einen oder mehrere Pressenstempel 58 umfassen, um die Feststoffkörper 34, die noch nicht auf die Größe der gewünschten Feststoffkörner 38 zerkleinert sind, in gewünschter Weise zu zerkleinern.

Die Reinigungseinrichtung 28 kann insbesondere ein- oder mehrstufig ausgebildet sein und eine oder mehrere Reinigungsstufen 60, 62 und 64 umfassen. In Figur 2 sind schematisch die Reinigungsstufen 62 und 64 als optionale Reinigungsstufen gestrichelt eingezeichnet.

Die Reinigungseinrichtung 28 kann insbesondere eine Abtrenneinrichtung 66 zum Abtrennen der sedimentierbaren Feststoffe 30 aus dem Betonrestwasser 12 umfassen. Die Abtrenneinrichtung 66 ermöglicht es insbesondere, die Fein- und/oder Schwebepartikel aus dem Betonrestwasser 12 abzutrennen oder zu entfernen.

Jeder Reinigungsstufe 60, 62 und 64 kann eine entsprechende Abtrenneinrichtung 66, 68 oder 70 zugeordnet sein. Insbesondere können die Reinigungsstufen 60, 62, 64 auch die Abtrenneinrichtungen 66, 68 und 70 umfassen.

Die Reinigungseinrichtung 28 kann insbesondere Abtrenneinrichtungen 66, 68 und 70 in Form von Schrägklärern, Lamellenklärern und/oder Hydrozyklonen umfassen. Diese Vorrichtungen ermöglichen auf einfache Weise das Abtrennen von feinsten Partikeln und Schwebstoffen aus dem Betonrestwasser 12.

Ferner kann die Verfestigungseinrichtung 32 eine Presseinrichtung 72 umfassen, mit der die abgetrennten oder entfernten sedimentierbaren Feststoffe 30 aus dem Betonrestwasser zu Feststoffkörpern 34 oder Feststoffkörnern 38 gepresst oder verpresst werden können. Bei der Presseinrichtung 72 kann es sich insbesondere um eine mechanische Presse zum Ausbilden plattenförmiger Feststoffkörper 34, die weiter zu Feststoffkörnern 38 zerkleinert werden können, oder um eine Matrizenpresse handeln, um direkt Feststoffkörner 38 durch Pressen auszubilden.

Außerdem kann das System 10 optional eine Trocknungseinrichtung 74 umfassen. Diese kann insbesondere ausgebildet sein, um die von der Verfestigungseinrichtung 32 ausgebildeten Feststoffkörner 38 zu trocknen. Entsprechend ist sie der Verfestigungseinrichtung 32 nachgeschaltet.

Werden mit der Verfestigungseinrichtung 32 Feststoffkörper 34 ausgebildet, die größer als die letztlich gewünschten Feststoffkörner 38 sind, kann die Trocknungseinrichtung 74 der Zerkleinerungseinrichtung 36 vor- oder nachgeschaltet sein. Es besteht also die Option, die noch zu zerkleinernden Feststoffkörper 34 vor dem Zerkleinern zu trocknen oder erst die bereits zerkleinerten Feststoffkörner 38 zu trocknen.

Des Weiteren kann das System 10 optional eine Eindickungseinrichtung 76 zum Eindicken der abgetrennten sedimentierbaren Feststoffe 30 umfassen. Die Eindickungseinrichtung 76 kann insbesondere der Verfestigungseinrichtung 32 vorgeschaltet sein.

Um das gereinigte Betonrestwasser 12 qualitativ noch weiter aufzuwerten, kann das System 10 eine Filtereinrichtung 78 umfassen. Das gereinigte Betonrestwasser 12, mithin also das Restwasser 40, welches von der Reinigungseinrichtung 28 abgegeben wird, kann so gefiltert und weiter gereinigt werden.

Um das System 10 insbesondere kontinuierlich betreiben zu können, ist es vorteilhaft, wenn das System 10 ferner eine Restwassersammel- und/oder Restwasserspeichereinrichtung 80 zum Sammeln und/oder Speichern des Restwassers 40 umfasst. Sie kann insbesondere als Restwassersammelbehälter 82 ausgebildet sein.

Optional kann in der Restwassersammel- und/oder Restwasserspeichereinrichtung 80 eine Wasserdichtemesseinrichtung 84 ausgebildet sein, die mit der Steuer- und/oder Regelungseinrichtung 52 verschaltet ist. So lässt sich eine Wasserdichte des Restwassers 40 bestimmen und insbesondere die Reinigungseinrichtung 28, welche mit der Steuer- und/oder Regelungseinrichtung 52 zusammenwirkend ausgebildet ist, entsprechend steuern und/oder regeln.

Um das Restwasser 40 der Sammeleinrichtung 16 zuzuführen, kann ferner eine Restwasserzuführeinrichtung 86 vorgesehen sein. Optional sind auch mehrere solcher Restwasserzuführeinrichtung 86 vorsehbar, insbesondere auch um Restwasser 40 aus der Restwassersammel- und/oder Restwasserspeichereinrichtung 80 der Reinigungseinrichtung 28 zuzuführen.

Das System kann ferner eine pH-Wert-Messeinrichtung 88 zum Messen eines pH-Werts des Restwassers 40 umfassen. Insbesondere kann die pH-Wert-Messeinrichtung 88 in der Restwassersammel- und/oder Restwasserspeichereinrichtung 80 angeordnet oder ausgebildet sein. Sie ist optional mit der Steuer- und/oder Regelungseinrichtung 52 gekoppelt, um den gemessenen pH-Wert des Restwassers 40 an diese zu übertragen.

Der gemessene pH-Wert kann insbesondere genutzt werden, um mit einer optionalen Neutralisationseinrichtung 90 das Restwasser 40 zu neutralisieren oder im Wesentlichen zu neutralisieren, insbesondere automatisch, und zwar insbesondere in Abhängigkeit des mit der pH-Wert-Messeinrichtung 88 gemessenen pH-Werts. Die Neutralisationseinrichtung 90 kann insbesondere von der Steuer- und/oder Regelungseinrichtung 52 angesteuert werden.

Die bereits oben beschriebene Wasserdichtemesseinrichtung 42 zum Messen einer Dichte des Betonrestwassers 12 kann insbesondere in der Reinigungseinrichtung 28 angeordnet oder ausgebildet sein. Sie kann ausgebildet sein zum kontinuierlichen oder diskontinuierlichen Messen der Wasserdichte. Insbesondere kann der gemessene Wasserdichte-Wert an die mit der Wasserdichtemesseinrichtung 42 gekoppelte Steuer- und/oder Regelungseinrichtung 52 übertragen werden.

Die Steuer- und/oder Regelungseinrichtung 52 kann insbesondere eine Wasserdichte-Sollwert-Vorgabeeinrichtung 92 zum Vorgeben eines Wasserdichte-Sollwerts des Betonrestwassers 12 umfassen oder mit dieser zusammenwirkend ausgebildet sein. Die Steuer- und/oder Regelungseinrichtung 52 ist insbesondere ausgebildet zum Steuern und/oder Regeln der Reinigungseinrichtung 28 derart, dass das Betonrestwasser 12 so lange gereinigt wird, bis ein mit einer der Wasserdichtemesseinrichtungen 42 oder 84 gemessener Wasserdichte-Istwert des gereinigten Betonrestwassers 12 beziehungsweise des Restwassers 40 dem Wasserdichte-Sollwert entspricht oder kleiner als der vorgegebene Wasserdichte-Sollwert ist.

Wie bereits oben beschrieben, kann die optionale Bindemittelzuführeinrichtung 44 dem Betonrestwasser 12 vor der Reinigungseinrichtung 28 Bindemittel zuführen. Optional kann eine weitere Bindemittelzuführeinrichtung 44 auch derart angeordnet sein, dass sie den ausgebildeten Feststoffkörnern 38 Bindemittel zusetzt. Mithin kann sie also auch der Verfestigungseinrichtung 32, insbesondere der Feststoffkörnereinheit 50, oder der Zerkleinerungseinrichtung 36 nachgeschaltet sein. Insbesondere können die Bindemittelzuführeinrichtungen 44 den optionalen Trocknungseinrichtungen 74 vorgeschaltet sein. So können die Feststoffkörner 38 mit dem zugegebenen Bindemittel trocknen.

Die Bindemittelzuführeinrichtung 44 kann insbesondere in Form einer Zementzuführeinrichtung ausgebildet sein, um dem Betonrestwasser 12 oder den abgetrennten Feststoffen 30 und/oder den Feststoffkörnern 38 in gewünschter Menge Bindemittel in Form von Zement zuzuführen.

Ferner kann das System 10 eine Füllstoff- und/oder Isolierstoffzuführeinrichtung 94 umfassen, um einen oder mehrere Füllstoffe und/oder einen oder mehrere Isolierstoffe zu den Feststoffkörnern 38 zuzuführen, und zwar bevor diese ausgebildet werden, also insbesondere der Verfestigungseinrichtung 32 vorgeschaltet oder dieser nachgeschaltet.

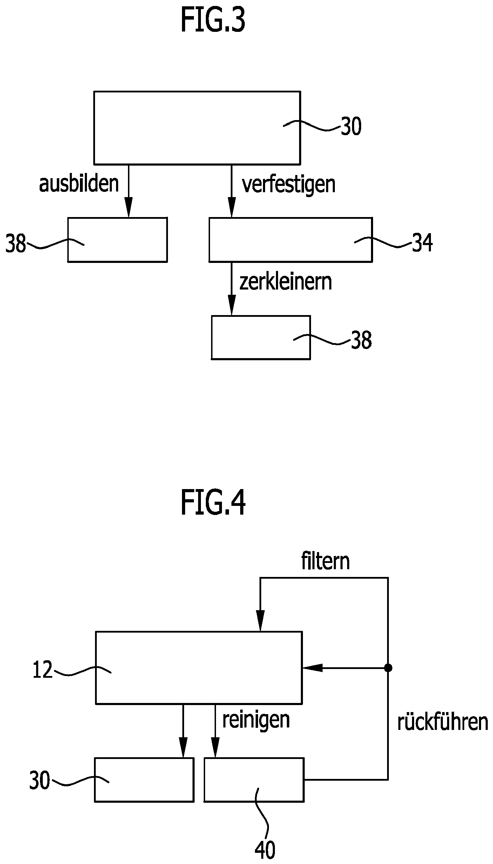

Mit dem beschriebenen System 10 lassen sich insbesondere die oben beschriebenen Verfahren zur Aufbereitung von Betonrestwasser 12 durchführen. Bei diesen Verfahren werden, wie schematisch in Figur 3 dargestellt, die sedimentierbaren Feststoffe 30 zu Feststoffkörpern 34 oder zu Feststoffkörnern 38 geformt. Sind die Feststoffkörper 34 größer als die gewünschten Feststoffkörner, werden die Feststoffkörper 34 alternativ zu Feststoffkörnern 38 zerkleinert.

Figur 4 zeigt ein erweitertes Ablaufschema eines Ausführungsbeispiels eines Verfahrens.

Gesammeltes Betonrestwasser 12 wird gereinigt und die sedimentierbaren Feststoffe 30 durch Reinigen abgetrennt. Diese können wie in Figur 3 dargestellt und oben beschrieben zu Feststoffkörnern 38 weiterverarbeitet werden.

Das beim Reinigen anfallende Restwasser 40 kann insbesondere dem Betonrestwasser 12 zugeführt werden, um eine Dichte des Betonrestwassers 12 abzusenken. Optional kann das Restwasser 40 vor dem Zugeben zum Betonrestwasser 12 auch gefiltert werden.

Wie insbesondere in Figur 4 schematisch dargestellt, kann ein in sich geschlossener Wasserkreislauf zum Aufbereiten des Betonrestwassers 12 ausgebildet werden. Wasserverluste in diesem Kreislauf können beispielsweise durch Zugabe von Frischwasser ausgeglichen werden.

Wesentlicher Bestandteil des Systems 10 sind die Zerkleinerungseinrichtung 36 beziehungsweise die Verfestigungseinrichtung 32, die es ermöglichen, aus den sedimentierbaren Feststoffen 30, die bislang aufwendig oder kostspielig als Sondermüll entsorgt werden müssen, für die Betonproduktion wertvolle Grundstoffe in Form von Feststoffkörnern 38 oder als Rohstoffe in Form von Feststoffkörpern 34 auszubilden.

In der beschriebenen Weise lässt sich das unvermeidlich bei der Betonproduktion anfallende Abwasser 14 im Wesentlichen vollständig aufbereiten, einerseits in Restwasser 40 und andererseits in Feststoffkörper 34 beziehungsweise Feststoffkörner 38.

### Bezugszeichen

- 10: System
- 12: Betonrestwasser
- 14: Abwasser
- 16: Sammeleinrichtung
- 18: Sammelbecken
- 20: Betonmischanlage
- 22: Lkw-Fahrmischer
- 24: Bewegungseinrichtung
- 26: Rühreinrichtung
- 28: Reinigungseinrichtung
- 30: Feststoffe
- 32: Verfestigungseinrichtung
- 34: Feststoffkörper
- 36: Zerkleinerungseinrichtung
- 38: Feststoffkörner
- 40: Restwasser
- 42: Wasserdichtemesseinrichtung
- 44: Bindemittelzuführeinrichtung
- 46: Festkörpereinheit
- 48: Plattenverfestiger
- 50: Feststoffkörnereinheit
- 52: Steuer- und/oder Regelungseinrichtung
- 54: Eingabeeinrichtung
- 56: Brechwalze
- 58: Pressenstempel
- 60: Reinigungsstufe
- 62: Reinigungsstufe
- 64: Reinigungsstufe
- 66: Abtrenneinrichtung
- 68: Abtrenneinrichtung
- 70: Abtrenneinrichtung
- 72: Presseinrichtung
- 74: Trocknungseinrichtung
- 76: Eindickungseinrichtung
- 78: Filtereinrichtung
- 80: Restwassersammel- und/oder Restwasserspüleinrichtung
- 82: Restwassersammelbehälter
- 84: Wasserdichtemesseinrichtung
- 86: Restwasserzuführeinrichtung
- 88: pH-Wert-Messeinrichtung
- 90: Neutralisationseinrichtung
- 92: Wasserdichtesollwert-Vorgabeeinrichtung
- 94: Füllstoff- und/oder Isolierstoffzuführeinrichtung

## Patentansprüche

1. Verfahren zur Aufbereitung von Betonrestwasser (12), welches bei der Frischbetonproduktion als Abwasser (14) anfällt und frischen Rück- oder Restbeton enthält, bei welchem Verfahren Betonrestwasser (12) gesammelt und gereinigt wird, beim Reinigen des Betonrestwassers (12) in diesem enthaltene sedimentierbare Feststoffe (30) abgetrennt oder entfernt werden und aus den abgetrennten oder entfernten sedimentierbaren Feststoffen (30) Feststoffkörper (34) ausgebildet werden, **dadurch gekennzeichnet, dass** die Feststoffkörper (34) zu Feststoffkörnern (38) zerkleinert werden oder dass die Feststoffkörper (34) in Form von Feststoffkörnern (38) ausgebildet werden.

2. Verfahren nach Anspruch 1, **dadurch gekennzeichnet, dass** die Feststoffkörner (38) mit einer mittleren Korngröße in einem Bereich von etwa 4 mm bis etwa 50 mm, insbesondere in einem Bereich von etwa 6 mm bis etwa 25 mm, durch Zerkleinern hergestellt oder ausgebildet werden wobei insbesondere die mittlere Korngröße vorgegeben wird.

3. Verfahren nach einem der voranstehenden Ansprüche, **dadurch gekennzeichnet, dass**
a) die Feststoffkörper (34) mechanisch zerkleinert werden, insbesondere durch Einwirken von Brecherwalzen (56) oder Pressenstempeln (58)
und/oder
b) das gesammelte Betonrestwasser (12) in Bewegung gehalten wird, insbesondere durch Rühren,
und/oder
c) die Abtrennung sedimentierbarer Feststoffe (30) aus dem Betonrestwasser in mindestens einem Abtrennschritt oder in mindestens einer Abtrennstufe durchgeführt wird
und/oder
d) sedimentierbare Feststoffe (30) in Form von Fein- und/oder Schwebepartikeln aus dem Betonrestwasser (12) abgetrennt oder entfernt werden
und/oder
e) sedimentierbare Feststoffe (30) aus dem Betonrestwasser (12) durch Schräg- und/oder Lamellenklärer und/oder Hydrozyklon abgetrennt oder entfernt werden
und/oder
f) die abgetrennten oder entfernten sedimentierbaren Feststoffe (30) zum Ausbilden von Feststoffkörpern (34) oder Feststoffkörnern (38) gepresst oder verpresst werden.

4. Verfahren nach einem der voranstehenden Ansprüche, **dadurch gekennzeichnet, dass**
a) die abgetrennten sedimentierbaren Feststoffe (30) getrocknet werden,
und/oder
b) die Feststoffkörper (34) vor dem Zerkleinern oder dass die Feststoffkörner (38) getrocknet werden
und/oder
c) die abgetrennten sedimentierbaren Feststoffe (30) vor dem Ausbilden von Feststoffkörpern (34) eingedickt werden
und/oder
d) das gereinigte Betonrestwasser (12) gefiltert wird.

5. Verfahren nach einem der voranstehenden Ansprüche, **dadurch gekennzeichnet, dass** das gereinigte Betonrestwasser (12) als Restwasser (40) gesammelt und/oder gespeichert wird, insbesondere in einem Restwassersammelbehälter (82),
wobei insbesondere
a) das Restwasser (40) dem Betonrestwasser (12) vor und/oder während der Reinigung zugeführt wird
und/oder
b) ein pH-Wert des Restwassers (40) gemessen wird,
wobei insbesondere das Restwasser (40) in Abhängigkeit des gemessenen pH-Werts neutralisiert oder im Wesentlichen neutralisiert wird, insbesondere durch Zugabe einer Base.

6. Verfahren nach einem der voranstehenden Ansprüche, **dadurch gekennzeichnet, dass**
a) die Dichte des Betonrestwassers (12) vor dem Reinigen und/oder beim Reinigen gemessen wird,
insbesondere kontinuierlich oder diskontinuierlich,
und/oder
b) ein Wasserdichte-Sollwert des Betonrestwassers (12) vorgegeben wird und dass das Betonrestwasser (12) so lange gereinigt wird, bis ein gemessener Wasserdichte-Istwert des gereinigten Betonrestwassers (12) dem Wasserdichte-Sollwert entspricht oder kleiner als der Wasserdichte-Sollwert ist,
und/oder
c) den abgetrennten sedimentierbaren Feststoffen (30) vor dem Ausbilden von Feststoffkörpern (34) oder Feststoffkörnern (38) mindestens ein Bindemittel zugegeben wird
und/oder
d) dem ungereinigten Betonrestwasser (12) mindestens ein Bindemittel zugegeben wird und/oder dass dem Betonrestwasser (12) beim Reinigen mindestens ein Bindemittel zugegeben wird
und/oder
e) den Feststoffkörnern (38) mindestens ein Bindemittel zugegeben wird
und/oder
f) den Feststoffkörnern (38) vor und/oder nach dem Ausbilden derselben mindestens ein Füllstoff und/oder mindestens ein Isolierstoff zugegeben wird
g) die Feststoffkörper (34) in Form von Platten ausgebildet werden.

7. Verwendung gemäß einem Verfahren nach einem der voranstehenden Ansprüche hergestellter Feststoffkörner (38) als Zuschlagstoff zum Herstellen von Beton, insbesondere Frischbeton, oder zum Herstellen von Straßenbelägen.

8. System zur Aufbereitung (10) von Betonrestwasser (12), welches bei der Frischbetonproduktion als Abwasser (14) anfällt und frischen Rück- oder Restbeton enthält, umfassend eine Sammeleinrichtung (16) zum Sammeln des Betonrestwassers (12) und eine Reinigungseinrichtung (28) zum Reinigen des Betonrestwassers (12), welche Reinigungseinrichtung (28) ausgebildet ist zum Reinigen des Betonrestwassers (12) durch Abtrennen von Feststoffen, welches System ferner eine Verfestigungseinrichtung (32) zum Ausbilden von Feststoffkörpern (34) aus den abgetrennten Feststoffen (30) umfasst, **dadurch gekennzeichnet, dass** das System (10) eine Zerkleinerungseinrichtung (36) zum Zerkleinern der Feststoffkörper (34) zu Feststoffkörnern (38) umfasst oder dass die Verfestigungseinrichtung (32) ausgebildet ist zum Ausbilden der Feststoffkörper (34) in Form von Feststoffkörnern (38).

9. System nach Anspruch 8, **dadurch gekennzeichnet, dass**
a) die Verfestigungseinrichtung (32) und/oder die Zerkleinerungseinrichtung (36) ausgebildet sind zum Herstellen von Feststoffkörnern (38) mit einer mittleren Korngröße in einem Bereich von etwa 4 mm bis etwa 50 mm,
insbesondere in einem Bereich von etwa 6 mm bis etwa 25 mm, wobei weiter insbesondere das System eine Eingabeeinrichtung (54) zum Vorgeben der mittleren Korngröße der Feststoffkörner (38) umfasst,
und/oder
b) die Zerkleinerungseinrichtung (36) in Form einer mechanischen Zerkleinerungseinrichtung (36) ausgebildet ist,
welche insbesondere mindestens eine Brecherwalze (56) und/oder mindestens einen Pressenstempel (58) umfasst.

10. System nach Anspruch 8 oder 9, **dadurch gekennzeichnet, dass**
a) die Reinigungseinrichtung (28) mehrstufig ausgebildet ist
und/oder
b) die Reinigungseinrichtung (28) eine Abtrenneinrichtung (66) zum Abtrennen sedimentierbarer Feststoffe (30) in Form von Fein- und/oder Schwebepartikeln aus dem Betonrestwasser (12) umfasst
und/oder
c) die Reinigungseinrichtung (28) mindestens einen Schräg- und/oder mindestens einen Lamellenklärer und/oder mindestens einen Hydrozyklon umfasst
und/oder
d) das System eine Presseinrichtung (72) umfasst zum Pressen oder Verpressen der abgetrennten oder entfernten sedimentierbaren Feststoffe (30) zum Ausbilden von Feststoffkörpern (34) oder Feststoffkörnern (38)
und/oder
e) das System eine Trocknungseinrichtung (74) zum Trocknen der abgetrennten sedimentierbaren Feststoffe (30)
und/oder
f) die Trocknungseinrichtung (74) der Zerkleinerungseinrichtung (36) vor- oder nachgeschaltet ist.

11. System nach einem der Ansprüche 8 bis 10, **gekennzeichnet durch**
a) eine Eindickungseinrichtung (76) zum Eindicken der abgetrennten sedimentierbaren Feststoffe (30) vor dem Ausbilden von Feststoffkörpern (34)
und/oder
b) mindestens eine Filtereinrichtung (78) zum Filtern des gereinigten Betonrestwassers (12).

12. System nach einem der Ansprüche 8 bis 11, **gekennzeichnet durch** eine Restwassersammel- und/oder Restwasserspeichereinrichtung (80) zum Sammeln und/oder Speichern des gereinigten Betonrestwassers (12) als Restwasser (40), insbesondere in Form eines Restwassersammelbehälter (82).

13. System nach Anspruch 12, **gekennzeichnet durch**
a) eine Restwasserzuführeinrichtung (86) zum Zuführen von Restwasser (40) von der Restwassersammel- und/oder Restwasserspeichereinrichtung (80) zur Sammeleinrichtung (16) und/oder zur Reinigungseinrichtung (28)
und/oder
b) eine pH-Wert-Messeinrichtung (88) zum Messen eines pH-Werts des Restwassers (40),
insbesondere in der Restwassersammel- und/oder Restwasserspeichereinrichtung (80),
und/oder
c) eine Neutralisationseinrichtung (90) zum Neutralisieren oder im Wesentlichen Neutralisieren des Restwassers (40), insbesondere in Abhängigkeit des gemessenen pH-Werts.

14. System nach einem der Ansprüche 8 bis 13, **dadurch gekennzeichnet dass**
a) das System eine zweite Wasserdichtemesseinrichtung (42) umfasst zum Messen einer Dichte des Betonrestwassers (12) in der Reinigungseinrichtung (28),
insbesondere in Form einer kontinuierlich oder diskontinuierlich messenden zweiten Wasserdichtemesseinrichtung (42),
und/oder
b) das System eine Wasserdichte-Sollwert-Vorgabeeinrichtung (92) umfasst zum Vorgeben eines Wasserdichte-Sollwerts des Betonrestwassers (12) und eine mit der Wasserdichte-Sollwert-Vorgabeeinrichtung zusammenwirkende Steuer- und/oder Regelungseinrichtung (52) umfasst zum Steuern und/oder Regeln der Reinigungseinrichtung (28) derart, dass das Betonrestwasser (12) so lange gereinigt wird, bis ein mit der ersten oder zweiten Wasserdichtemesseinrichtung (42, 84) gemessener Wasserdichte-Istwert des gereinigten Betonrestwassers (12, 40) dem Wasserdichte-Sollwert entspricht oder kleiner als der Wasserdichte-Sollwert ist
und/oder
c) das System eine Bindemittelzuführeinrichtung (44) umfasst zum Zugeben mindestens eines Bindemittels zu den abgetrennten sedimentierbaren Feststoffen (30) vor und/oder nach dem Ausbilden von Feststoffkörpern (34) oder Feststoffkörnern (38),
wobei insbesondere
c1) die Bindemittelzuführeinrichtung (44) mit der Sammeleinrichtung (16) und/oder der Reinigungseinrichtung (28) in fluidwirksamer Verbindung steht
und/oder
c2) die Bindemittelzuführeinrichtung (44) in Form einer Zementzuführeinrichtung ausgebildet ist,
und/oder
d) das System eine Füllstoff- und/oder Isolierstoffzuführeinrichtung (94) umfasst zum Zugeben mindestens eines Füllstoffs und/oder mindestens eines Isolierstoffs zu den Feststoffkörnern (38) vor und/oder nach dem Ausbilden derselben
und/oder
e) die Verfestigungseinrichtung (32) in Form einer Plattenverfestigungseinrichtung (48) zum Ausbilden der Feststoffkörper (34) in Form von Platten ausgebildet ist.

15. Verwendung eines Systems nach einem der Ansprüche 8 bis 14 zur Durchführung eines Verfahrens nach einem der Ansprüche 1 bis 6.
